# EUROPÄISCHE PATENTSCHRIFT

(11) **EP 1 027 204 B1**
(45) Veröffentlichungstag und Bekanntmachung des Hinweises auf die Patenterteilung: **24.09.2003**
(21) Anmeldenummer: 98947433.3
(22) Anmeldetag: 17.08.1998
(51) Int. Cl.: B29C 65/02

(54) **MIT EINEM SILICON-GEL AN EINE SCHEIBE ANGEKOPPELTER SENSOR**
SENSOR JOINED TO A GLASS PANE WITH A SILICON GEL
CAPTEUR COUPLE A UNE VITRE PAR UN GEL DE SILICONE

(30) Priorität: 19.08.1997 DE 19735876; 03.02.1998 DE 19804165
(43) Veröffentlichungstag der Anmeldung: 16.08.2000
(73) Patentinhaber: Valeo Wischersysteme GmbH, 74321 Bietigheim-Bissingen (DE)
(72) Erfinder: SCHULER, Thomas, D-75446 Wiernsheim (DE)
(74) Vertreter: Steimle, Josef, Dipl.-Ing.
(86) Internationale Anmeldenummer: EP9805216
(87) Internationale Veröffentlichungsnummer: WO99009681

(56) Entgegenhaltungen:
- EP-A- 0 540 040
- US-A- 5 262 640
- US-A- 5 486 258

## Beschreibung

Die Erfindung betrifft eine Vorrichtung zum Befestigen eines mit Strahlung, vorzugsweise Infrarotlicht arbeitenden Regensensors an einem Körper, insbesondere an einer Kraftfahrzeugscheibe mit den Merkmalen des Oberbegriffs des Anspruchs 1.

Aus der WO-A-96 21 568 ist es bekannt, mit Hilfe eines durchsichtigen Klebebandes einen Sensor an eine Scheibe anzukoppeln. Dabei kann beispielsweise als Koppelelement ein sogenannter Acryl-Schaum (Acryl-Foam) verwendet werden. Dieses Material klebt fest an der Scheibe und ist nur schwer abzulösen. Der Montageprozess eines Sensors an die Scheibe erfordert für ein luftblasenfreies Ankoppeln ein Vakuum und unter Umständen muss vorher die Windschutzscheibe erwärmt werden. Gibt der Sensor eine Infrarotstrahlung ab oder empfängt diese, so ist es vielfach erwünscht, ein infrarotdurchlässiges Taglichtfilter (schwarzes Erscheinungsbild) zu haben. Ein entsprechendes schwarzes Einfärben des Acryl-Schaums ist aber nicht möglich. Langzeittemperaturuntersuchungen bei 100 Grad haben ein Vergilben und Aushärten des Acryl-Schaums zur Folge. Diese Alterungserscheinungen wirken sich negativ auf die Funktion und den mechanischen Halt des Sensors aus. Die Erfindung geht daher aus von einem Ankoppelmittel der sich aus dem Oberbegriff des Hauptanspruchs ergebenden Gattung.

Aus der US-A-5,262,640 ist ein Regensensor bekannt, der mittels eines doppelseitigen Klebestreifens an einer Scheibe befestigbar ist. Durch die Dicke des Klebestreifens ist der Abstand des Sensorgehäuses von der Scheibe in gewissen Grenzen definiert. Aus der US-A-5,486,258 ist ein mittels Silikon befestigter Sensor bekannt. Die Dicke der Silikonschicht ist durch mehr oder weniger starkes Anpressen des Sensors an die Scheibe variierbar.

Aufgabe der Erfindung ist es, ein nicht aushärtendes, durchsichtiges und für Infrarot-Strahlung durchlässig einfärbbares Koppelmittel vorzuschlagen, welches dauerhaft eine gute und präzise Ankopplung eines Sensors an den Körper gewährleistet.

Die Aufgabe wird mit einer Vorrichtung gelöst, die die Merkmale des Anspruchs 1 aufweist.

Die Erfindung besteht im Prinzip darin, ein weich bleibendes Gel zu verwenden. Ein derartiges Gel ist beispielsweise unter der Bezeichnung SilGel 612 von der Firma Wacker im Handel erhältlich. Dabei wird vorzugsweise ein farbloses Silicon-Gel gewählt, welches eine Viskosität bei 23 Grad von ungefähr 800 - 1200 mm²/s besitzt und eine Dichte von etwa 0,96 g/cm³. Der Brechungsindex n₀25 kann bei 25 Grad C etwa die Größe 1. 4026 aufweisen. Das genannte Silicon-Gel wird vielfach auch als RTV-2 Silicon-Kautschuk bezeichnet und ist unter dem Handelsnamen Semicosil 912 von der Fa. Wacker Chemie GmbH erhältlich.

Der Sender und/oder Empfänger (Sensor) kann durch Beimischungen in das Silicon-Gel direkt mittels des Gels auf die Scheibe geklebt werden. Der wesentliche Vorteil des Gels besteht darin, dass dieses nicht aushärten kann und auch nach langer Zeit und auch nach längerer Erhitzung und Sonnenbestrahlung ein weiches gallertartiges Vulkanisat bleibt. Weiterhin ist für das Gel wichtig, dass dieses Luftpartikel nicht dauerhaft einschließt, sondern diese aufgrund ihrer Eigenbewegung das Gel nach geraumer Zeit verlassen. Auch werden mit dem Gel Spannungen zwischen dem Gehäuse des Sensors und der Scheibe vermieden, an die der Sensor angekoppelt ist.

Erfindungsgemäß wird mittels eines sich an der Scheibe abstützenden Federelements, das beispielsweise in dem Fuß eines Rückspiegels an der Scheibe angebracht sein kann, der Sensor elastisch über das Gel an der Scheibe angekoppelt. Die Erfindung besteht also im wesentlichen darin, bei der Befestigung ein als Ankoppelmittel zu verwenden, wobei Sender und/oder Empfänger in einem Sendeempfänger vereint sind, der als Regensensor arbeitet. Die von dem Regensensor ausgesandte und wieder empfangene Strahlung soll vorzugsweise Infrarotlicht sein, wobei auch das Ankoppelmittel mit einem Infrarotlicht durchlassenden Stoff, insbesondere einem schwarzen Farbstoff, eingefärbt ist. Auf diese Weise erhält der in der Regel mit einem dunklen Gehäuse versehene Regensensor ein durchgehend schwarzes Aussehen, so dass sich das durch die Scheibe sichtbare Ankoppelmittel optisch nicht von dem Rest des Sensorgehäuses abhebt.

Um nun zu gewährleisten, dass die innerhalb des Senders bzw. Empfängers angeordneten Detektoren bzw. Strahlungskörper genau den vorgeschriebenen Abstand zur Scheibenoberfläche haben, wird durch die Vorsprünge der genaue Abstand von Sender und/oder Empfänger zu der Scheibe eingehalten.

Ein besonderer Vorteil des verwendeten Gels besteht auch darin, dass es mit einem für infrarote Messstrahlung durchlässigen Farbstoff einfärbbar ist, der für andere (Licht-) Strahlung weitgehend als Filter wirkt, wodurch sich die Messgenauigkeit bei einem mit Infrarotstrahlung arbeitenden Messgerät (z.B. Regensensor) erhöhen lässt.

Gemäß einer Weiterbildung sorgen die sich ergebenden Abflusskanäle dafür, dass überschüssiges Gel entweichen kann. Hierdurch wird das zwischen Sensorfläche und Scheibe befindliche Gel nicht nur in einer vorgegebenen Stärke erhalten, sondern es besitzt auch die angestrebte Dichte weitgehend unabhängig von der während der Montage eingefüllten Menge. Hierdurch kann man also vorsorglich eine etwas größere Menge des Gels als benötigt auf die der Scheibe zugewandte Fläche des Sensors aufbringen. Wird danach der Sensor bzw. das Sensorgehäuse mit seiner vorderen umlaufenden Kante auf die Scheibe aufgedrückt, so kann das überschüssige Gel durch die Vorsprünge seitlich entweichen, so dass das Gel immer mit gleicher Spannung und gleicher Dichte zwischen dem Sensor und der Scheibe angeordnet ist.

Um die Dichte und die Spannung in dem Ankoppelmaterial (Gel) aufrechtzuerhalten, wird die Vorspannung, wie weiter oben schon erläutert, nach den bisherigen Vorschlägen durch zusätzliche Federn aufgebracht, die sich an der Scheibe abstützen. Um hier eine Vereinfachung zu erreichen, ist ein Halter an der Scheibe befestigt, der weitgehend starr auf den Sensor einwirkt. Die elastisch federnde Wirkung wird hier nicht durch eine zusätzliche Feder, sondern durch die Federwirkung des Ankoppelmittels (Gel) selbst erreicht. Hierdurch ergibt sich für den Halter eine weitgehend unkomplizierte Konstruktion. Hierbei wird bei der Montage die Wand des Halters als erstes mit der Scheibe verbunden, dann der Sensor mit seinem Gehäuse und dem aufgebrachten Ankoppelmittel in die Halterwand eingefügt und anschließend der Deckel unter Krafteinwirkung in Richtung Scheibe mit der Halterwand verrastet. Es sind aber auch andere Konstruktionen denkbar, indem beispielsweise das Sensorgehäuse direkt in der Halterwand verrastet wird oder indem der Halter mit eingesetztem Sensor (und Ankoppelmittel) unter Anpresskraft an der Scheibe befestigt (angeklebt) wird.

Die Form der Halterwand wird man an die Außenkontur des Sensors anpassen. Die Wand wird besonders einfach, wenn der Sensor im wesentlichen kreisförmig ist, so dass die Wand ein ringförmiges Aussehen bekommt.

Die Funktion des Halters muss nicht nur darin bestehen, eine Abstützung für den Sensor gegenüber der Scheibe zu bieten. Der Halter kann zusätzlich noch elektrische Anschlüsse, beispielsweise in Form einer Kontaktleiste aufnehmen, durch die der Sensor während der Montage an die nachgeordneten elektrischen Baugruppen anschließbar ist. Gleichzeitig kann die Stromversorgung über die elektrischen Anschlüsse des Halters erfolgen.

An sich kann der Halter mittels Klebemitteln in einfacher Weise mit der Scheibe verklebt werden. Es ist aber auch denkbar, den Halter über in die Scheibe eingegossene Rastmittel mit der Scheibe zu verrasten. Gemäß einer besonders einfachen Anordnung ist der Halter aus dem Material der Scheibe herausgeformt oder in diese eingegossen. So kann beispielsweise ein aus Metall oder Kunststoff bestehender Halter während des Herstellvorgangs der Scheibe mit dieser vergossen werden. Es kann aber das Scheibenmaterial direkt halterförmig aus der Scheibe herausgeformt werden.

Entsprechend können Anschlussleitungen, die zum Halter führen, nicht auf die Scheibe aufgeklebt, sondern direkt in die Scheibe eingegossen sein.

Bei einer genauen Dosierung der Menge des Ankoppelmittels, welches sich zwischen Sensor und Scheibe befindet, lässt sich bei engtolerierten Abmessungen von Halter und Sensor der Sensor selbst in einem vorgeschriebenen Abstand und mit der gewünschten Dichte zwischen Sensor und Scheibe anordnen, Um aber eine weitere Tolerierung zu erlauben, müssen die Vorsprünge nicht unbedingt zur genauen Einhaltung des Abstandes auf der Scheibe aufsitzen. Es genügt, wenn durch sie Kanäle gebildet werden, durch welche das überschüssige Ankoppelmittel aufgrund einer vorgegebenen Kraft seitlich weggedrückt werden kann, so dass das Gel eine vorgegebene Stärke einnimmt. Die Weite der Kanäle hat somit einen Einfluss auf die Spannung, unter der das Gel im angekoppelten Zustand steht.

Die erfindungsgemäße Rastverbindung zwischen Halter und Sensor lässt sich weiterhin dazu nutzen, diese Verbindung bei einer eine zulässige Seitenkraft überschreitenden Kraft zu lösen. In diesem Falle ist dann der Sensor gegenüber der Scheibe weitgehend frei beweglich, so dass bei einem Unfall die Verletzungsgefahr durch den vorstehenden Sensor vermieden wird.

Ein Ausführungsbeispiel der Erfindung wird nachfolgend anhand der Zeichnung erläutert. Darin zeigt:
- Fig. 1: in auseinandergezogener Darstellung den Halter mit Sensor;
- Fig. 2: den Sensor in Einbaulage auf der Scheibe (ohne Haltering);
- Fig. 3: den Sensor nach Fig. 2 in Draufsicht;
- Fig. 4: den Sensor nach Fig. 2 in Vorderansicht;
- Fig. 5: einen Schnitt durch den Sensor mit Halterdeckel gemäß der Schnittlinie A-A in Fig. 2;
- Fig. 6: einen Schnitt durch den Sensor in Seitenansicht entsprechend Fig. 2;
- Fig. 7: einen vergrößerten Ausschnitt aus Fig. 6;
- Fig. 8: eine Draufsicht auf den Sensor mit Halterdeckel und Halterring entsprechend der Sicht nach Fig. 3 mit geänderter Deckelbefestigung;
- Fig. 9: schematisch ein Verrastungsprinzip zwischen dem Halterdeckel und dem Haltering gemäß Fig. 8;
- Fig. 10: die Verrastung nach Fig. 9 in der Seitenansicht;
- Fig. 11: Ansicht eines Sensors mit gemäß Fig. 3 geändertem Deckel; und
- Fig. 12: Ansicht eines Sensors mit gemäß Fig. 3 geändertem Deckel.

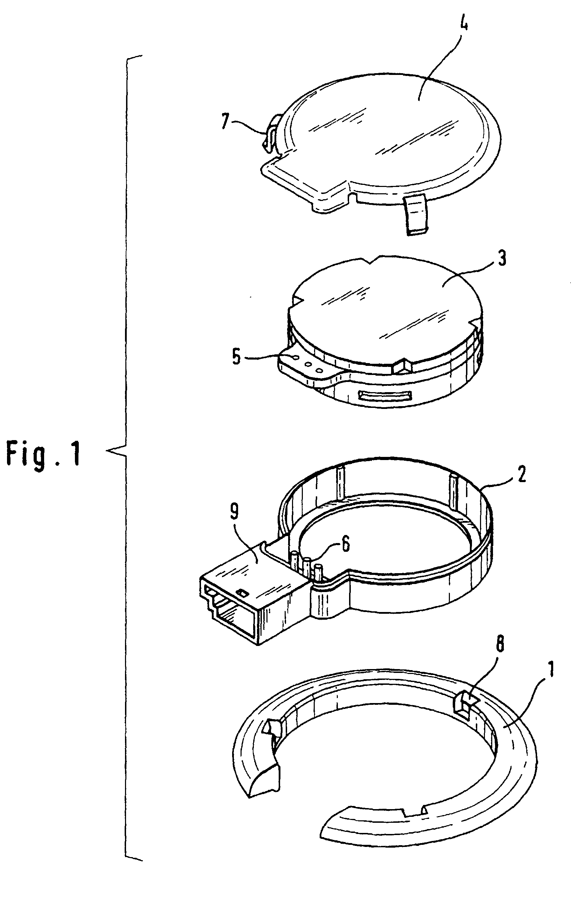

Fig. 1 zeigt einen Sensor 3, der in ein Sensorgehäuse 2 einfügbar ist. Das Sensorgehäuse 2 besitzt einen Stecker, wobei beim Einfügen des Sensors 3 in das Gehäuse 2 Stecköffnungen 5 mit einer Steckerreihe 6 kontaktiert werden. Ein Halter, der aus einem Haltering 1 (weiter oben vielfach als Halterwand bezeichnet) und einem Deckel 4 besteht, nimmt das Sensorgehäuse 2 mit eingefügtem Sensor 3 auf. Der Deckel 4 besitzt Rastlappen 7, welche in zugehörige Rastausnehmungen 8 bei der Befestigung des Sensors 2, 3 im Halter 1, 4 einrasten. Der Halter ist durch eine Klebverbindung mit einer nicht dargestellten Scheibe verbunden.

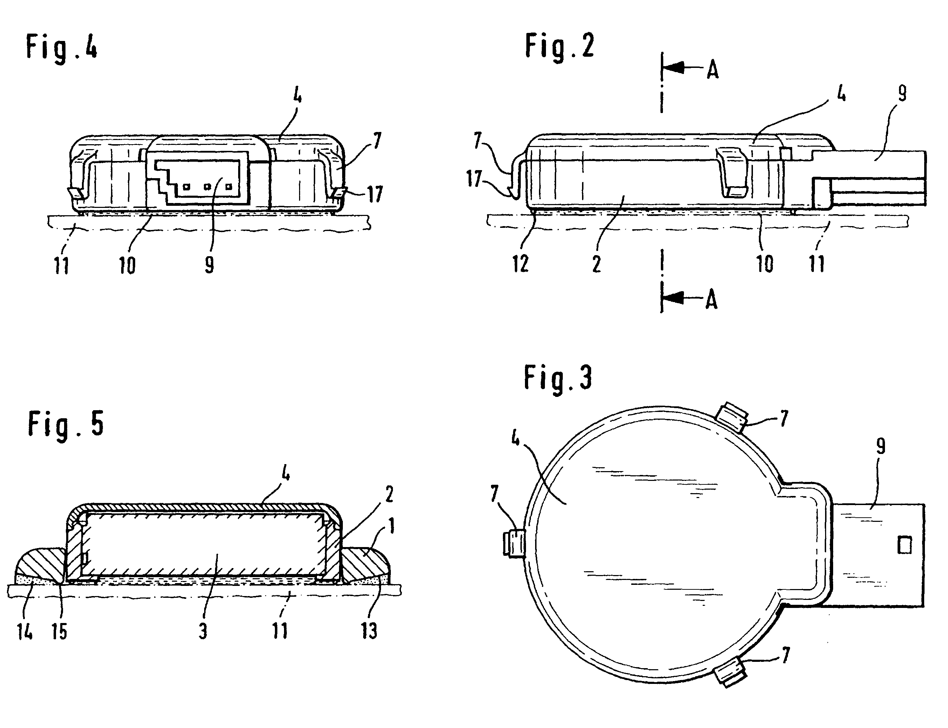

Fig. 2 zeigt in vergrößerter Darstellung das Sensorgehäuse 2, auf dem der Halterdeckel 4 mit seinen Rastlappen 7 aufgesetzt ist. Die Halterwand 1 wurde weggelassen, um die Schicht des Ankoppelmittels 10 zeigen zu können, welche auf einer Scheibe 11 eines Kraftfahrzeugs befestigt ist.

Fig. 3 zeigt den Sensor 2 mit Halterdeckel 4 in der Draufsicht, wobei von dem Sensorgehäuse 2 aber nur der Stecker 9 noch zu erkennen ist.

Fig. 4 zeigt den Sensor mit Deckel aus einer auf den Stecker 9 gerichteten Sicht.

Fig. 5 stellt einen Schnitt längs der Linie A-A in Fig. 2 dar, wobei in geschnittener Form auch der innerhalb seines Gehäuses 2 befindliche Sensor 3 erkennbar ist. Außerhalb des Umfangs des Gehäuses 2 ist der Haltering in noch nicht eingebauter Lage zu erkennen. Im eingebauten Zustand ist er schließlich durch eine Klebschicht 14 mit der Scheibe verklebt. In Fig. 2 sind Vorsprünge 12 angedeutet, welche für eine vorgeschriebene Stärke der Schicht des Ankoppelmittels 10 sorgen.

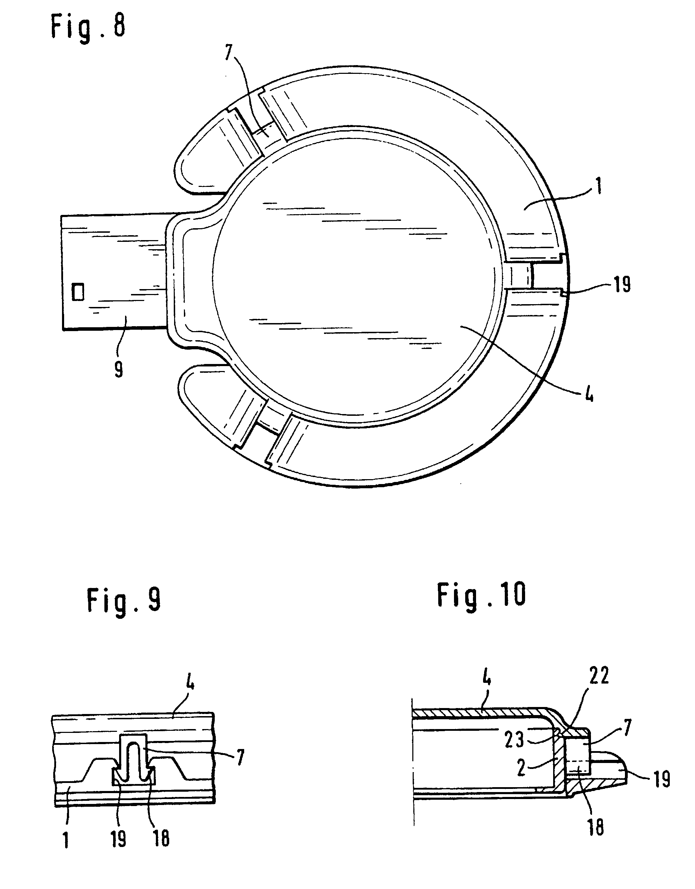

Der Haltering 1 ist in Fig. 5 und Fig. 10 gegenüber der Scheibenfläche mit geneigter Klebfläche 13 dargestellt, zwischen der Klebfläche 13 und der Scheibe 11 befindet sich eine im, wesentlichen ringförmige Klebschicht 14, die nach radial innen keilförmig in ihrer Stärke abnimmt. Der Haltering 1 besitzt radial innen eine Dichtleiste 15, die ein Übertreten des Klebers 14 zu dem Sensorgehäuse 2 verhindern soll, so daß das Gehäuse leicht aus dem Haltering 1 lösbar bleibt. Die Klebfläche 13 muß nicht zwingend gegenüber der Scheibe geneigt sein. Vielfach empfiehlt sich auch, diese im wesentlichen parallel zur Scheibe 11 zu halten, so daß dann die Klebschicht 14 die Form einer Ringscheibe hat und hierdurch wird Klebmasse eingespart und ggf. die Klebkraft erhöht.

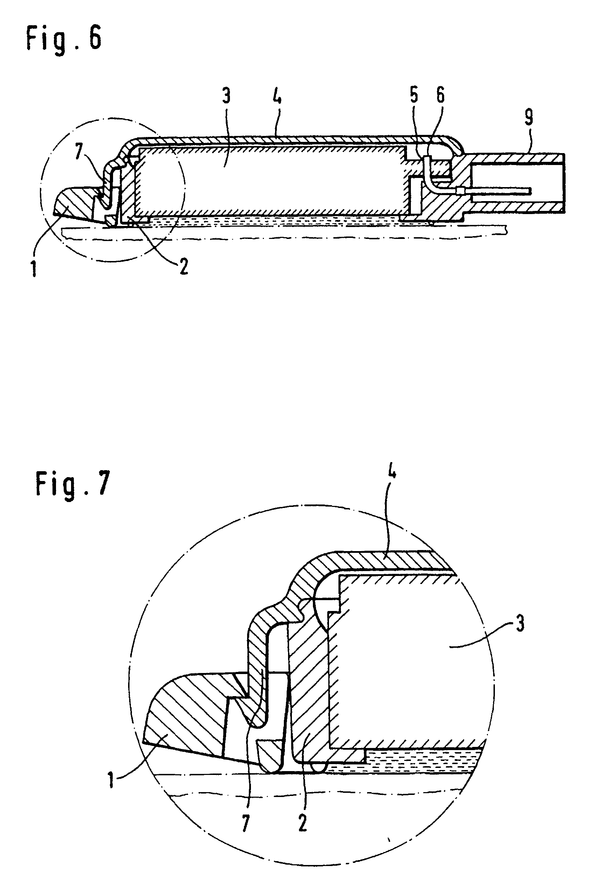

Aus den Fig. 1 bis 7 ist eine erste Befestigungsart des Sensors 3 in dem Halter 1,4 ersichtlich, bei der radial nach außen vorspringende Rastvorsprünge 17 an den Rastlappen 7 in entsprechende Ausnehmungen 8 (siehe Fig. 1) in dem Haltering 1 des Halters eingreifen.

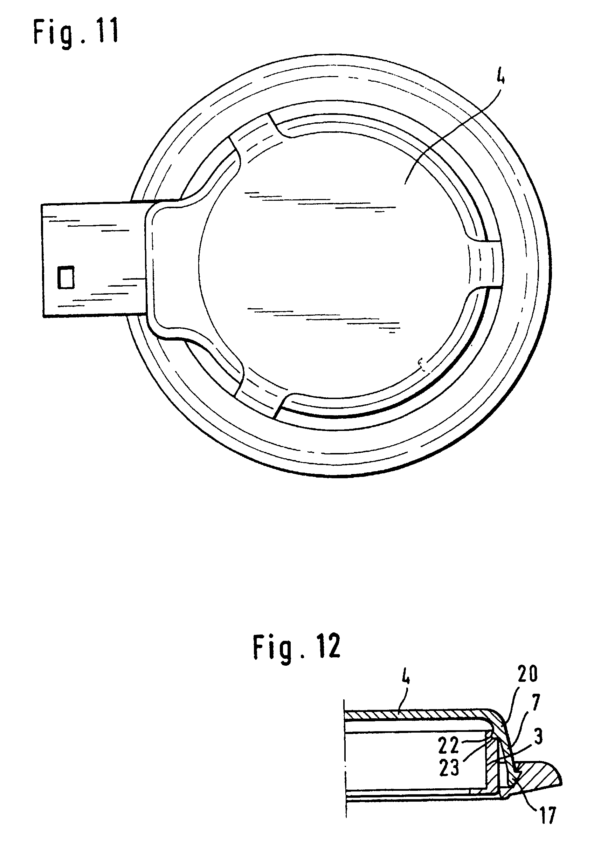

Die Fig. 8 bis 10 zeigen eine zweite Befestigungsart, in dem als Rastmittel sich tangential erstreckende Rastvorsprünge 18 in entsprechende Ausnehmungen 19 in dem Rastring 1 des Halters eingreifen. Im vorliegenden Fall sind an die Lappen 7 jeweils zwei gegenläufig auslenkbare Rastvorsprünge 18 vorgesehen. Eine weiterhin abgeänderte Rastmöglichkeit, die etwas der Rastung nach den Fig. 1 bis 7 gleicht, ist in den Fig. 11 und 12 dargestellt. Auch hier sind wieder radial nach außen weisende Rastvorsprünge 17 vorgesehen. Neu ist hier, daß die deckelseitigen Enden 20 der Rastlappen 7 formschlüssig an der Außenkante des Sensors 3 angreifen. Dabei kann beispielsweise ein umlaufender Vorsprung 22 in eine umlaufende Ausnehmung 23 im Gehäuse 3 eingreifen, um den Deckel 4 zu zentrieren und in senkrecht zur Scheibe gerichteter Richtung festzulegen, wodurch die Rastkraft der Rastvorsprünge genauer definiert werden kann.

Aus den Fig. 3 und 8 ist erkennbar, daß die umlaufende Ausnehmung 23 bzw. der umlaufende Vorsprung 22 im wesentlichen kreisförmig umlaufen kann, während bei der Variante nach Fig. 12 der Deckel an dem Gehäuse sich nur an drei Stellen abstützt.

## Patentansprüche

1. Vorrichtung zum Befestigen eines mit Strahlung, vorzugsweise Infrarotlicht arbeitenden Regensensors (3) an einem Körper (11), insbesondere an einer Kraftfahrzeugscheibe, wobei der Regensensor (3) mit Silicon-Gel (10) an den Körper (11) angekoppelt ist, **dadurch gekennzeichnet, daß** das Silicon-Gel (10) vorzugsweise mit einem Infrarotlicht durchlassenden Stoff, insbesondere schwarzem Farbstoff, eingefärbt ist, der Regensensor (3) in einem Sensorgehäuse (2) fest eingebettet ist und daß der auf dem Körper (11) aufsitzende Gehäuserand des Sensorgehäuses (2) mit örtlichen Vorsprüngen (12) versehen ist.

2. Vorrichtung nach Anspruch 1, **dadurch gekennzeichnet, daß** die Vorsprünge (12) Zwischenräume aufweisen, über welche überschüssiges Silicon-Gel (10) abfließen kann.

3. Vorrichtung nach einem der vorangegangenen Ansprüche, **dadurch gekennzeichnet, daß** das Sensorgehäuse (2) unter Vorspannung an den Körper (11) angepreßt wird.

4. Vorrichtung nach einem der vorangegangenen Ansprüche, **dadurch gekennzeichnet, daß** ein Halter (1) an der Scheibe (11) befestigt ist, der direkt oder über ein im wesentlichen unelastisches Zwischenglied, z.B. einen Deckel (4) am Sensor (3) angreift und den Sensor (3) über das Silicon-Gel (10) und ggf. Vorsprünge (12) mittelbar gegen den Körper (11) preßt.

5. Vorrichtung nach einem der vorangegangenen Ansprüche, **dadurch gekennzeichnet, daß** das Silicon-Gel (10) zwischen dem Sensor (3) und dem angrenzenden Körper (11) elastisch vorgespannt ist.

6. Vorrichtung nach einem der vorangegangenen Ansprüche, **dadurch gekennzeichnet, daß** der Halter (1) eine von dem Körper (11) abstehende und mit ihrer Bodenfläche an dem Körper (11) befestigte Wand besitzt, die den Sensor (3) zumindest teilweise aufnimmt, daß der Halter (1) einen Deckel (4) besitzt, welcher mit dem Halter (1) vorzugsweise durch eine Verrastung verbindbar ist, und daß die Abmessungen des Halters (1), des Sensors (3) und des Silicon-Gel (10) derart gewählt sind, daß im befestigten Zustand des Sensors (3) dieser gegen das elastisch wirkende Silicon-Gel (10) gepreßt ist.

7. Vorrichtung nach Anspruch 6, **dadurch gekennzeichnet, daß** die Verrastung mit mindestens einer Sollbruchstelle versehen ist, die bei einer definierten Öffnungskraft die Verrastung löst.

8. Vorrichtung nach einem der vorangegangenen Ansprüche, **dadurch gekennzeichnet, daß** das Gehäuse (2) elektrische Anschlüsse besitzt, über die der Sensor (3) hinsichtlich Signalführung und/oder Stromversorgung anschließbar ist.

9. Vorrichtung nach einem der vorangegangenen Ansprüche, **dadurch gekennzeichnet, daß** der Halter (1) einstückig mit dem Körper (11) verbunden, insbesondere vergossen ist.

10. Vorrichtung nach einem der vorangegangenen Ansprüche, **dadurch gekennzeichnet, daß** die elektrischen Zuleitungen zum Halter (1) innerhalb des Körpers (11) geführt sind.

11. Vorrichtung nach einem der vorangegangenen Ansprüche, **dadurch gekennzeichnet, daß** der Halter (1) und/oder das Sensorgehäuse (2) im Bereich des Silicon-Gels (10) seitliche Durchbrüche aufweist, die ein Entweichen überschüssigen Silicon-Gels (10) in die Durchbrüche bzw. nach außen gestatten.

12. Vorrichtung nach Anspruch 11, **dadurch gekennzeichnet, daß** die Durchbrüche durch im wesentlichen senkrecht zur Fläche des Körpers (11) weisende, sich an diese abstützende Vorsprünge (12) gebildet sind.

## Claims

1. Device for joining a rain sensor (3) using radiation, preferably infra red light to a body (11), preferably to a windshield, wherein the rain sensor (3) is attached with silicon-gel (10) to the body, **characterized in that** the silicon-gel (10) is preferably being colored with a dye that is permeable to infrared light, in particular, a black dye, that the rain sensor (3) is rigidly embedded in a sensor housing (2), and that the housing edge that rests on the body (11) is provided with local projections (12).

2. Device according to claim 1, **characterized in that** the projections (12) have intermediate spaces which allow an excess quantity of gel to escape.

3. Device according to one of the preceding claims, **characterized in that** the sensor housing (2) is pressed onto the body (11) under a certain prestress.

4. Device according to one of the preceding claims, **characterized in that** a holder (1) is mounted on the glass pane (11), with said holder engaging on the sensor (3) either directly or via an essentially rigid intermediate element, such as a cover (4), and pressing the sensor (3) indirectly against the body (11) via the joining medium (10) and, if so required, projections (12).

5. Device according to one of the preceding claims, **characterized in that** the silicon-gel (10) is elastically prestressed between the sensor (3) and the adjacent body (11).

6. Device according to one of the preceding claims, **characterized in that** holder (1) contains a wall that protrudes from the body (11) and is mounted on the body (11) with its base surface, said wall at least partially accomodating the sensor (3), that the holder (1) contains a cover (4) that can be connected to the holder (1), preferably by means of interlocking, and that the dimensions of the holder (1), the sensor (3) and the silicon-gel (10) are chosen such that the sensor (3) is pressed against the elastically acting silicon-gel (10) in its mounted condition.

7. Device according to claim 6, **characterized in that** the interlocked connection is provided with at least one predetermined breaking point that separates this connection under a defined opening force.

8. Device according to one of the preceding claims, **characterized in that** housing (2) contains electric connections that serve for receiving signals from the sensor (3) and/or for supplying said sensor with power.

9. Device according to one of the preceding claims, **characterized in that** the holder (1) is connected integrally to the body (11), in particular, cast into said body.

10. Device according to one of the preceding claims, **characterized in that** the supply lines leading to the holder (1) extend within the body (11).

11. Device according to one of the preceding claims, **characterized in that** the holder (1) and/or the sensor housing (2) contain(s) lateral openings within the region of the silicon-gel (10), making it possible for excess silicon-gel (10) to escape into the openings or the surrounding space.

12. Device according to one of the preceding claims, **characterized in that** the openings are formed by projections (12) that essentially extend perpendicular to the surface of the body (11) and are supported on this surface.

## Revendications

1. Dispositif pour fixer un capteur de pluie (3) travaillant avec un rayonnement, de préférence de la lumière infrarouge, sur un corps (11), en particulier sur une vitre automobile, le capteur de pluie (3) étant couplé avec du gel au silicone (10) au corps (11), **caractérisé en ce que** le gel au silicone (10) est teinté de préférence avec une substance laissant passer la lumière infrarouge, en particulier avec un colorant noir, le capteur de pluie (3) étant inséré de façon fixe dans un boîtier de capteur (2) et **en ce que** le bord du boîtier, reposant sur le corps (11), du boîtier de capteur (2) est pourvu de parties saillantes (12) locales.

2. Dispositif selon la revendication 1, **caractérisé en ce que** les parties saillantes (12) présentent des interstices, par lesquels du gel au silicone (10) excédentaire peut s'écouler.

3. Dispositif selon l'une quelconque des revendications précédentes, **caractérisé en ce que** le boîtier de capteur (2) est pressé sous prétension sur le corps (11).

4. Dispositif selon l'une quelconque des revendications précédentes, **caractérisé en ce qu'**un support (1) est fixé sur la vitre (11), lequel s'applique directement ou au moyen d'un élément intermédiaire essentiellement non élastique, par exemple un couvercle (4), sur le capteur (3) et presse le capteur (3) au moyen du gel au silicone (10) et éventuellement de parties saillantes (12) directement contre le corps (11).

5. Dispositif selon l'une quelconque des revendications précédentes, **caractérisé en ce que** le gel au silicone (10) est prétendu de façon élastique entre le capteur (3) et le corps (11) contigu.

6. Dispositif selon l'une quelconque des revendications précédentes, **caractérisé en ce que** le support (1) présente une paroi s'écartant du corps (11) et fixée avec sa surface de fond sur le corps (11), qui loge au moins partiellement le capteur (3), **en ce que** le support (1) présente un couvercle (4), qui peut être relié au support (1) de préférence par un enclenchement, et **en ce que** les dimensions du support (1), du capteur (3) et du gel au silicone (10) sont choisies de telle sorte que, lorsque le capteur (3) est fixé, celui-ci est pressé contre le gel au silicone (10) agissant de façon élastique.

7. Dispositif selon la revendication 6, **caractérisé en ce que** l'enclenchement est pourvu d'au moins un point de rupture théorique, qui défait l'enclenchement avec une force d'ouverture définie.

8. Dispositif selon l'une quelconque des revendications précédentes, **caractérisé en ce que** le boîtier (2) présente des branchements électriques, par lesquels le capteur (3) peut être raccordé en ce qui concerne le guidage du signal et/ou l'alimentation électrique.

9. Dispositif selon l'une quelconque des revendications précédentes, **caractérisé en ce que** le support (1) est relié, de préférence coulé, d'un seul tenant avec le corps (11).

10. Dispositif selon l'une quelconque des revendications précédentes, **caractérisé en ce que** les arrivées électriques au support (1) sont guidées à l'intérieur du corps (11).

11. Dispositif selon l'une quelconque des revendications précédentes, **caractérisé en ce que** le support (1) et/ou le boîtier de capteur (2) présentent dans la zone du gel au silicone (10) des passages latéraux qui permettent un échappement du gel au silicone (10) excédentaire dans les passages ou vers l'extérieur.

12. Dispositif selon la revendication 11, **caractérisé en ce que** les passages sont formés par des parties saillantes (12) orientées sensiblement perpendiculairement à la surface du corps (11) et s'appuyant sur celle-ci.
